# EUROPEAN PATENT SPECIFICATION

(11) **EP 4 037 987 B1**
(45) Date of publication and mention of the grant of the patent: **07.05.2025**
(21) Application number: 20789293.6
(22) Date of filing: 02.10.2020
(51) Int. Cl.: B65D 43/02, B65D 65/46, B65D 47/08

(54) **BIODEGRADABLE SIPLID AND METHOD FOR MANUFACTURING SUCH SIPLID**
BIOLOGISCH ABBAUBARES SIPLID UND VERFAHREN ZU SEINER HERSTELLUNG
COUVERCLE À BOIRE BIODÉGRADABLE ET PROCÉDÉ DE FABRICATION D'UN TEL COUVERCLE À BOIRE

(30) Priority: 04.10.2019 NL 2023969
(43) Date of publication of application: 10.08.2022
(73) Proprietor: Huhtamaki Molded Fiber Technology B.V., 8938 AN Leeuwarden (NL)
(72) Inventor: VEENJE, Sandor Klaas, 8938 AN Leeuwarden (NL); NIEMARKT, Christian, 8938 AN Leeuwarden (NL); PERIDY, Guillaume Daniel Bernard, 8938 AN Leeuwarden (NL)
(74) Representative: Arnold & Siedsma
(86) International application number: PCT/NL2020/050611
(87) International publication number: WO 2021/066654

(56) References cited:
- WO-A1-2015/071743
- WO-A1-2015/130992
- US-A1- 2013 248 481
- US-A1- 2014 054 306
- US-B2- 9 451 841

## Description

The invention relates to a biodegradable siplid, a drinking cup with such a siplid and a method for manufacturing such siplids.

The EU has expressed the intention to reduce the production and use of single-use plastic food packaging products to zero in 2021. A known major source of single-use plastic waste are liquid cups and the accompanying (single-use) siplids, such as siplids for travel cups used for soft drinks or hot drinks such as coffee. Billions of single-use plastic siplids are produced each year, many of which end up in the environment as waste.

In order to reduce the environmental impact and reduce plastic waste, biodegradable siplids, which include marine degradable or compostable siplids, were developed. Such biodegradable siplids are known from practice.

US 2013/0248481 A1 discloses a lid made of fibrous material according to the preamble of claim 1.

A disadvantage of the known biodegradable siplids is fluid uptake in the structure of the biodegradable siplid, which is due to the structure and material of the siplids. Such fluid uptake decreases structural integrity of the siplid at the location of the fluid uptake. In addition, the fluid uptake, in case of coloured drinks, leads to discolouration of the siplid which has a negative impact on consumer satisfaction.

Therefore, there is a need for a biodegradable siplid having a reduced fluid uptake to prevent degradation and discolouration.

To that end the invention provides a biodegradable siplid from moulded pulp according to claim 1.

An advantage of reducing the thickness and/or increasing the density of the siplid in the compressed areas is that it results in a reduction of the fluid uptake in these areas due to an increased resistance against fluid intrusion. The reduction of the thickness and/or increase of the density may be performed for example by compressing the number of compressed areas with a higher pressure than the remaining parts of the siplid. It may also be performed by applying an additional compression step to compress the second areas.

The decreased thickness and/or increased density of the compressed areas is compared to a thickness and/or density of the area that is lower respectively higher as compared to the average thickness and/or density of the siplid. Preferably, the higher pressure and/or additional compression step is applied/performed at the compressed areas having the same or an increased amount of material per area as compared to the average amount of material per area for the siplid.

Another advantage of the siplid according to the invention is that the rigidity of the compressed areas is increased compared to the rigidity of the other parts of the siplid. By providing the compressed areas, most notably on specific locations of the siplid such as the clamping elements, the overall strength of the siplid is increased, while simultaneously maintaining sufficient flexibility in the siplid.

Yet another advantage of the siplid according to the invention is that the strength of the compressed areas is (significantly) increased compared to the uncompressed areas. This provides a more robust siplid, which provides the advantage that the siplid is more resistant to damage and thus can more easily be transported. For example, for presently preferred embodiments of the siplid according to the invention a density increase of 25% results in a surprisingly high increase of compression strength (in N) of more than 35% and for some embodiments more than 50% or even more than 100%.

It is noted that the number of compressed areas in the siplid according to the invention are preferably manufactured from substantially the same base material. In other words, the base material is provided with the compressed areas during manufacturing of the siplid and does not require a significantly different base material.

The difference in thickness and/or density of the number of compressed areas is preferably a result of the manufacturing. It is noted that in most cases, the reduction in thickness will substantially automatically result in an increase of the density of that area, because the same amount of material is contained in a smaller volume (thus increasing density).

In an embodiment according to the invention, the biodegradable siplid from moulded pulp and/or moulded fiber comprises:
- a top wall having a top wall edge and a central axis that extends in a first direction;
- a side wall that is connected to the top wall along substantially the entire top wall edge, such that the side wall delineates the top wall, wherein the side wall at least partially extends under an angle with the central axis in the first direction; and
- one or more clamping elements that are positioned in the side wall and that are configured to clamp the siplid over an edge of a cup and be in clamping connection with a side wall of said cup;
wherein the siplid comprises a number of compressed areas having a decreased thickness and/or an increased density, and preferably wherein a base material of the siplid has a first thickness and wherein the thickness of the number of compressed areas is smaller than the first thickness and/or wherein the base material of the siplid has a first density and wherein the density of the number of compressed areas is higher than the first density.

In an embodiment according to the invention, a reduction in the thickness may be in the range of 10% - 90%, preferably may be in the range of 25% - 75% and more preferably may be in the range of 40% - 60% and/or wherein an increase in the density may be in the range of 30% - 70%, preferably may be in the range of 35% - 65% and more preferably may be in the range of 40% - 45%. Optionally, the increase in density is preferably in the aforementioned ranges in relation to the reduction in thickness.

The reduction in fluid uptake of the siplid depends on the amount of reduction and/or the amount of increase of the density, with a smaller thickness and/or a higher density leading to increased resistance against fluid uptake (and thus lower fluid uptake during use). On the other hand, the reduced thickness and/or increased density also increase the rigidity of the compressed areas, which may not always be preferred. The abovementioned ranges achieve a good balance between the increase in fluid uptake resistance and the rigidity.

In an embodiment according to the invention, the biodegradable siplid further comprises a sealing rim that is provided in the side wall and that is placeable over an edge of a cup to provide a sealing connection with said cup.

An advantage of the sealing rim is that it obviates or at least significantly reduces leakage of fluid between the siplid and a drinking cup to which the siplid is attached. The effect of the sealing rim as such increases the sealing effect that is already achieved by the use of the one or more clamping elements.

In an embodiment according to the invention, the number of compressed areas comprise moulded pulp and/or moulded fibres that are glassified.

An advantage of providing glazed fibers or pulp is that it provides enhanced protection against intrusion/uptake of fluids and moisture due to a reduced fluid uptake. In known biodegradable siplids, moisture or amounts of beverage enter the fiber layers of the siplid through the (rough) edges that are in contact with the siplid and/or via (prolonged) contact of the fluid with the siplid. This occurs for example at or near the drinking opening and/or the clamping elements and/or the sealing rim. Especially in case of 'coloured' fluids, such as coffee or coke, this provides coloured stains in the siplid, which reduce the attractiveness of the siplid during use. By providing locally glazed fibers or pulp, the siplid locally obtains a more dense structure, which obviates or at least significantly reduces the amount of uptake of external fluids/moisture and, additionally and/or alternatively reduces colour staining of the siplid.

Another advantage is that the glazed fibers also provide a smoother finish, which is esthetically attractive to customers, especially near the drinking opening.

Yet another advantage is that the smoother finish, especially near the drinking opening edge, also improves the drinking experience of the customer by providing a smoother flow and a reduced risk of paper cuts.

Yet another advantage of the smoother finish is that, due to a lower variation in surface height, the sealing rim and/or clamping elements can be manufactured to a more specific measurement. **In** other words, the smoother edge allows the siplid to be manufactured to more precise specifications. This in turn leads to a better sealing and/or clamping of the siplid on a drinking cup edge.

In an embodiment according to the invention, the number of compressed areas comprise the sealing rim and/or one or more of the clamping elements.

It is especially advantageous when the compressed areas, which have a reduced thickness and/or an increased density, are the sealing rim and/or the clamping elements, because these areas are prone to prolonged exposure to fluid contained in the drinking cup. The increased protection against fluid uptake therefore results in a longer lifetime by virtue of reduced loss of integrity, as well as in reduced discolouration in case 'coloured' fluid, such as coffee of coke, is held in the drinking cup.

Another advantage is that the number of compressed areas, especially when these are the sealing rim and/or one ore more of the clamping elements, increase the rigidity of the sealing rim and/or the clamping areas and therewith the clamping and/or sealing properties of the siplid.

In an embodiment of the siplid according to the invention, the one or more clamping elements are formed by one or more projections that extend from the side wall radially inwards towards a central axis that extends substantially perpendicular to the top wall, wherein the one or more projections are placeable over the edge of a cup and against a cup side wall.

An advantage of clamping elements is that the siplid can easily and preferably releasable be connected with a drinking cup. The clamping may for example be achieved by providing a number of clamping elements in the side wall that together lock the drinking cup edge to the siplid, such it is not easily disengaged.

It is noted that the one or more projections can also be replaced by providing one or more indentations in the side wall in which the edge of a cup is placeable. This construction has similar effects and advantages as the use of the abovementioned projections.

In an embodiment of the siplid according to the invention, the side wall comprises an annular rim that extends radially outwards in a second direction that is substantially perpendicular to the central axis and the first direction, wherein the annular rim is provided with an annular projection that extends parallel to central axis in the first direction such that the annular projection comprises the sealing rim.

An advantage of providing an annular rim that is provided with a sealing rim is that it achieves the effect of both sealing the drinking edge cup with the siplid as well as that can be configured to cooperate with the one or more clamping elements to clamp the siplid to the drinking cup.

In an embodiment of the siplid according to the invention, the side wall comprises a first side wall section that extends over a predetermined length, and an upper rim section that extends from a radially inner edge that is connected to the first side wall section towards a radially outer edge, and a lower rim section that extends from the radially outer edge towards a lower rim edge, and an end side wall section that extends from the lower rim section towards an end side wall edge, wherein the lower rim section comprises the one or more clamping elements, wherein the upper rim section is provided with the sealing rim, and wherein the clamping elements and the sealing rim cooperate to form a drinking cup edge holding space in which the edge of a drinking cup is placeable and clampable such that the edge of the drinking cup is preferably releasably lockable in the drinking cup edge holding space.

The abovementioned embodiment provides an advantage in that it provides a further increased clamping force by the cooperation between the sealing rim and the one or more clamping elements. Moreover, the specific shape as described in this embodiment also provides a well distinguishable drinking cup edge opening in which the drinking cup edge is placeable. This directs users of the siplid to the way in which the siplid is to be used and/or applied to a drinking cup.

According to the invention, the siplid comprises a drinking opening in the top wall and/or the side wall of the siplid, wherein the drinking opening has a drinking opening edge that extends at least partially along a circumference of the drinking opening.

By providing a drinking opening, the siplid can easily be used during travel, for example when travelling in a car, because it obviates the need to remove the siplid when a sip is taken from the beverage in the drinking cup.

According to the invention, the drinking opening edge is one of the number of compressed areas. An advantage of providing the drinking opening as one of the compressed areas, thus in which the drinking opening edge has a reduced thickness and/or an increased density than for example a respective part of the top wall and/or the side wall at a distance from the drinking opening circumference, is that the reduced thickness provides improved protection against fluid uptake of the fibers or pulp. This is due to the higher density of the drinking edge and/or the reduced thickness, yet is additionally also due to the reduced surface area in the opening that can contact the fluid during drinking. As a result, stains in the siplid are substantially avoided. In addition, the migration of (some) components from the drink or fluid to the fibres of the material is also substantially prevented, which prevents loss of taste by selective uptake in the siplid.

A further advantage of providing a reduced thickness and/or increased density to the drinking opening edge, for example by providing additional pressure to the edge, is that a smoother edge is achieved, which is esthetically attractive to customers. In addition, the smoother edge also improves the drinking experience of the customer by providing a smoother flow and a reduced risk of paper cuts.

An even further advantage of the reduced thickness and/or increased density is a reduced risk of fibre rub off, i.e. the risk of fibres releasing from the drinking opening into the drink due to the more solid structure formed by the compressed drinking opening.

In an embodiment according to the invention, a subset of the number of the clamping elements that is positioned in the side wall near the drinking opening may have a decreased thickness and/or an increased density compared to the number of compressed areas.

An advantage of providing clamping elements near the drinking opening with a decreased thickness, which is smaller than the thickness of the other compressed areas, and/or with an increased density is that an increased clamping (strength) is achieved near the drinking opening, which is the side of the siplid that is exposed to the highest force during drinking. As a result, the risk of accidental release of the siplid during drinking is reduced.

Another advantage is that the area near the drinking opening has an increased wall strength, which reduces the risk of the side wall buckling under the weight of the fluid and/or the pressure from a users mouth against the siplid. This leads to a decreased risk of accidental release and/or leakage due to (local) buckling of the siplid wall.

Preferably, forming the subset of the number of clamping elements is performed in a compression step that is separate from the drying and moulding step in which the siplid is formed.

In an embodiment of the siplid according to the invention, the number of compressed areas may comprise a first number of compressed areas and a second number of compressed areas, wherein a thickness of the second number of compressed areas is smaller than a thickness of the first number of compressed areas, and/or wherein a density of the second number of compressed areas is higher than a density of the first number of compressed areas, and wherein the second number of compressed areas comprises clamping elements that are positioned in the side wall near and/or adjacent to the drinking opening.

An advantage of providing clamping elements near the drinking opening with a decreased thickness, which is smaller than the thickness of the other compressed areas, and/or with an increased density is that an increased clamping (strength) is achieved near the drinking opening, which is the side of the siplid that is exposed to the highest force during drinking. As a result, the risk of accidental release of the siplid during drinking is reduced.

Another advantage is that the area near the drinking opening has an increased wall strength, which reduces the risk of the side wall buckling under the weight of the fluid and/or the pressure from a users mouth against the siplid. This leads to a decreased risk of accidental release and/or leakage due to (local) buckling of the siplid wall.

In an embodiment according to the invention, the clamping element comprises a single clamping ring that extends over substantially the entire circumference of the side wall, wherein the clamping ring is a compressed area of the number of compressed areas, and wherein a part of the clamping ring near the drinking opening has a increased thickness and/or increased density compared to the remaining part of the clamping ring.

An advantage of a clamping ring is that the siplid has a high clamping force over the entire circumference of the cup to which it is attached. The clamping force is, by providing near the drinking opening a part of the clamping ring with an increased thickness and/or increased density, advantageously even increased near the drinking opening at which the greatest force is exerted on the siplid. As a result, an increased clamping (strength) is achieved near the drinking opening, which reduces the risk of accidental release of the siplid during drinking.

In an embodiment of the siplid according to the invention, the drinking opening is provided in the top wall of the siplid, and wherein the top wall is provided with a closure tab that is configured for resealably closing the drinking opening.

An advantage of a closure tab is that it is useable to prevent heat losses from hot drinks and/or prevent heating of cold drinks when the user is not drinking the beverage. In other words, a closure tab improves the user experience by preserving the beverage (either hot or cold) through shielding it from heating up or cooling down of a respective cold beverage or hot beverage. It is noted that the closure tab may be a separate closure tab that is not connected to the siplid or a closure tab that is (integrally) connected to the siplid (and is preferably integrally formed therewith).

In an embodiment of the siplid according to the invention, the closure tab is hingedly connected to the top wall, and wherein the hinge comprises a hinge area that is formed by pressing a part of the drinking opening circumference to a smaller thickness than an area directly adjacent to the hinge area, and wherein the closure tab is at least partially formed from the upper wall.

Instead of cutting out a drinking opening, the drinking opening may also be provided with a hinge that allows the drinking opening to be at least partially reclosed. Such a hinged closure is advantageously formed by pressing a part of the circumference with a higher pressure, such that it has a reduced thickness compared to other parts of the surface. As a consequence, the closure will, upon exerting pressure by a customer, fold around the pressed hinge, thus forming a hinged closure.

A hinged closure has the advantage that it provides additional conservation of heat (or cold) in the drink contained in the drinking cup to which the siplid is attached.

In an embodiment of the siplid according to the invention, the top wall comprises a number of indentations and/or projections.

An advantage of the siplid according to the invention is that it can, in a single moulding step, be provided with any number of projections and/or indentations in the top wall. This provides the advantage that commercial messages and/or brand name/forms can be applied to the top wall.

In an embodiment of the siplid according to the invention, an indentation of the number of indentations is configured for at least partially receiving the closure tab, and wherein, when the closure tab is in an open position, the drinking opening is accessible for a user.

It is preferred that, especially when a hinged connection is used, the top wall is provided with an indentation that is positioned adjacent the hinge and that is configured for receiving the closure tab. This allows a user to open the closure tab, fix it in place in the opening in the top wall to prevent it from interfering the with drinking action of the user, and subsequently be released from the opening to close the drinking opening again.

In an embodiment of the siplid according to the invention, the indentation that is configured for at least partially receiving the closure tab comprises a number of ribs that preferably extend parallel to each other along a side wall of the indentation downwards from the top wall.

The drinking opening in the siplid, as described above, is preferably provided with a hinged closure tab and an association indentation in the top wall of the siplid that is configured to receive the closure tab when it is in an open position. This has the advantage that the drinking opening remains free and easily accessible by a user. It has however been found that the closure tab, when moved into the associated indentation, often is released and moves back to the closing position when the siplid is tilted. This for example occurs when a user tilts the drinking cup with siplid during drinking. An advantage of the ribs provided in the indentation is that the closure tab is subjected to increased friction, therewith reducing or even obviating the risk of accidental release during use. It is preferred that the ribs extend parallel to each other from the top wall downwardly into the indentation. More preferably, it has been found that the ribs are most effective when positioned at a wall opposite the wall of the indentation near the hinged connection. In other words, the ribs extend on the side wall that is positioned furthest away from the hinge.

The number of ribs preferably is in the range of 2 - 8 and more preferably in the range of 3 - 5. Furthermore, the ribs, when viewed along the indentation side wall, have a width that is in the range of 0.2 - 2.0 mm, and preferably is in the range of 0.5 - 1.5 mm, and more preferably is in the range of 1.2 - 1.5 mm, and most preferably is around 1.4 mm. The ribs, when viewed from the indentation wall inwards to the open space of the indentation, have a depth in the range of 0.1 - 1.4 mm, more preferably in the range of 0.4 - 1.0 mm and more preferably in the range of 0.6 - 0.8 mm.

In an embodiment of the siplid according to the invention, the composition of the siplid comprises an AKD.

An advantage of adding an AKD is that it provides an increased resistance against moisture, which increase lifetime of the siplid during use. In use, siplids are exposed to a relatively high amount of moisture, such as moisture that arises from hot drinks as well as from the drinks themselves during drinking. The siplid should be provided such that it remains stiff and operational for a longer period of time during use, for example up to 2 hours. This can be achieved by providing siplids that comprise the abovementioned mixture.

In an embodiment according to the invention, the siplid comprises an amount of a biodegradable aliphatic polyester, and an inner contact surface that contacts the fluid during use preferably comprises a cellulose-based laminate layer.

In an embodiment according to the invention, the biodegradable aliphatic polyester may comprise an amount of one or more of PBS, PHB, PHA, PCL, PLA, PGA, PHBH and PHBV. Preferably, the use of biodegradable aliphatic polyester is combined with the use of further additives or substances that aim at improving or achieving specific properties of the packaging unit.

In an embodiment according to the invention the biodegradable aliphatic polyester comprises an amount of polybutylene succinate (PBS). PBS is one of the biodegradable aliphatic polyesters. PBS can also be referred to as polytetramethylene succinate. PBS decomposes naturally into water, CO2 and biomass. The use of PBS as a compostable material contributes to providing a sustainable product. The use of PBS is possible in food-contact applications including food packaging units from a moulded pulp material. An advantage of the use of PBS is that the decomposition rate of PBS is much higher as compared to other agents or components such as PLA (including variations thereof such as PLLA, PDLA and PLDLLA, for example).

In an embodiment of the siplid according to the invention, the water uptake of the moulded pulp and/or fiber material of the siplid and, specifically the compressed areas, is less than 25%, preferably less than 20%, and more preferably less than 10% when submerged in water for a period of 30 minutes.

An advantage of a reduced water uptake by the siplid is that the structural integrity of the siplid remains intact for a longer period of time.

Another advantage of the reduced water uptake is that the siplid according to the invention is less prone to fouling, especially fouling by uptake of coloured fluids, such as coffee, coke and/or other coloured drinks, which fouling would reduce the visual attractiveness of the siplid.

The reduced water uptake according to the invention may be achieved by a high amount of compression during the moulding step, which preferably leads to glazing of the moulded pulp and/or moulded fibers, yet may according to the invention also be achieved by adding additives.

In an embodiment of the siplid according to the invention, a Cobb-value of the siplid and, specifically the compressed areas, is less than 75 g/m², preferably less than 50 g/m² and most preferably less than 25 g/m².

An advantage of a siplid having the abovementioned Cobb-values is that the structural integrity of the siplid remains intact for a longer period of time.

Another advantage of the abovementioned Cobb-value is that the siplid according to the invention is less prone to fouling, especially fouling by uptake of coloured fluids, such as coffee, coke and/or other coloured drinks, which fouling would reduce the visual attractiveness of the siplid.

The aforementioned Cobb-value according to the invention may be achieved by a high amount of compression during the moulding step, which preferably leads to glazing of the moulded pulp and/or moulded fibers, yet may according to the invention also be achieved by adding additives as aforementioned.

In an embodiment according to the invention, the one or more clamping elements are positioned along a circumferential length of the side wall, wherein the one or more clamping elements together extend over at least one third of the circumferential length, preferably over around 50% of the circumferential length and most preferably over around 75% of the circumferential length of the side wall.

It has been found that, when the one or more clamping elements together extend over at least a third of the circumferential length of the siplid, an improved clamping and sealing of the siplid on the drinking cup edge is achieved. It is preferred that the one or more clamping elements extend over 50% or even 75% of the circumferential length in order to achieve an even further improvement in clamping and sealing of the siplid on the drinking cup edge.

It is noted that a variety of sources is available for biodegradable material to manufacture the biodegradable siplids according to the invention. In some cases, such biodegradable material has to be prepared in order to be usable for manufacturing siplids, whereas in other cases the biodegradable material can be used without any preprocessing.

In an embodiment, the siplids according to the invention may be manufactured from biomass material of plant or marine origin. In that respect, the siplid according to the invention may for example advantageously be manufactured by applying the method for for manufacturing a moulded fiber product from a biomass material of plant origin as disclosed in patent application WO2016/167648 from the same applicant, which is incorporated here by reference.

An advantage of using the method disclosed in WO2016/167648 for manufacturing a siplid according to the invention is that the siplid from a biomass material of plant origin improves the flexibility of possible raw materials used for such products. In addition, the use of biomass of plant origin improves the natural feel for the consumer. Also, especially in case the biomass of plant origin originates from a rest flow, the sustainability of the siplid according to the invention that is manufactured with the method according to WO2016/167648 is further enhanced. A sheet of moulded pulp and/or moulded fibre is preferably foreseen, having a thickness and density that is substantially equal over an entire sheet surface, wherein the sheet has a substantially square or perpendicular shape having longitudinal sides and transverse sides and a number of mould positions, wherein each mould position is configured to be moulded into a siplid according to the invention.

It is noted that the sheet comprises a base material that, before being subjected to the manufacturing of the siplids therefrom, has a substantially equal thickness and density over the entire surface of said sheet. It is only during the manufacturing step that the sheet, more specifically the siplids moulded therefrom, are provided with the compressed areas.

The invention also relates to a drinking cup, preferably a biodegradable drinking cup, provided with a siplid according to the claims invention.

The drinking cup according to the invention provides similar advantages and effects as the siplid and the sheet according to the invention.

The invention further also relates to a method for manufacturing a biodegradable siplid according to the invention, the method comprising:
- providing moulded pulp and/or moulded fibre, preferably a sheet
- compressing and drying the moulded pulp and/or moulded fibre in a mould to form one or more siplids;
wherein the method further comprises applying, in each siplid, a number of compressed areas having a decreased thickness and/or an increased density.

The method according to the invention provides similar advantages and effects as the siplid, the sheet and the drinking cup according to the invention.

In an embodiment of the method according to the invention, the step of applying a number of compressed areas comprises applying an increased pressure to the number of compressed areas during the compressing and drying step to provide a decreased thickness and/or an increased density, or comprises compressing the number of compressed areas in a separate compression step to provide a decreased thickness and/or an increased density.

In an embodiment of the method according to the invention, the method comprises compressing a subset of the number of compressed areas such that the subset has a decreased thickness and/or an increased density, wherein the subset of the number of compressed areas comprises clamping elements that are positioned near and/or adjacent to the drinking opening.

In an embodiment of the method according to the invention, the step of compressing a subset of the number of compressed areas comprises compressing the subset of the number of compressed areas in a separate compression step to provide a decreased thickness and/or an increased density compared to the subset of the number of compressed areas.

Further advantages, features and details of the invention are elucidated on the basis of preferred embodiments thereof, wherein reference is made to the accompanying drawings, in which:
Figure 1a shows a top view of an example of a siplid according to the invention;
Figure 1b shows a top view of a second example of a siplid according to the invention;
Figure 1c shows a detailed view of the opening and closure of figure 1a;
Figure 2 shows a side view of the example of figure 1a and 1b;
Figure 3 shows a second side view of the example of figure 1a and 1b;
Figure 4 shows a cross-section along line A - A of figure 1a and 1b;
Figure 5 shows a top view of a further example of a siplid according to the invention;
Figure 6 shows a side view of the example of figure 5;
Figure 7 shows a second side view of the example of figure 5;
Figure 8 shows a cross-section along line C - C of figure 5;

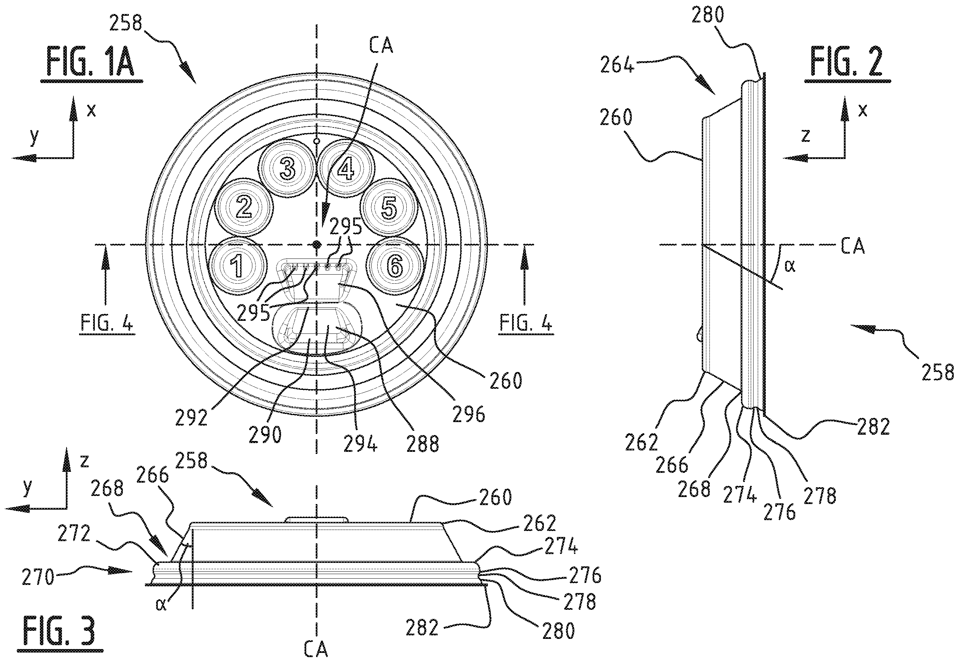

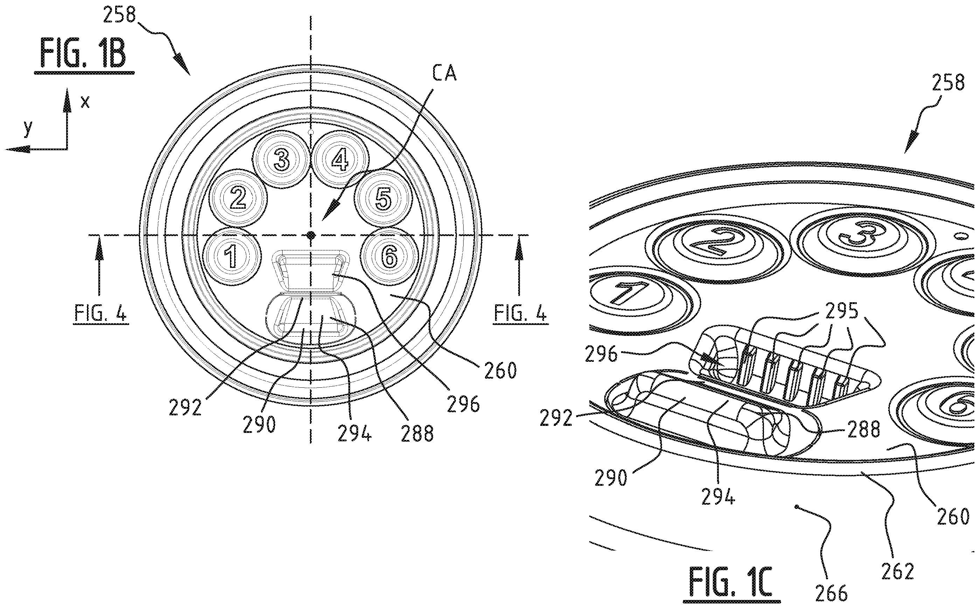

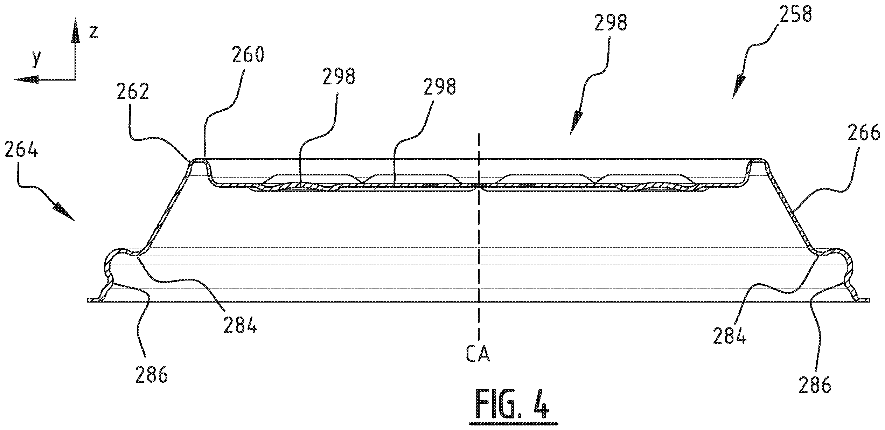

In an example of siplid 258 according to the invention (see figures 1 - 4), siplid 258 comprises top wall 260 that extends radially outwards from central axis CA in a second direction X and a third direction Y towards top wall edge 262 that delineates top wall 260. Top wall edge 262 is connected to side wall 264, and more specifically to first side wall section 266 that extends, when viewed in first direction Z along and under an angle α with central axis CA, from top wall edge 262 to radially inner edge 268 of annular ring 270. Annular ring 270 includes upper rim section 272 that extends, when viewed from central axis CA, radially outward in second direction X from radially inner edge 268 towards radially outer edge 274. In addition, annular ring 270 includes lower rim section 276 that substantially in first direction Z from radially outer edge 274 towards lower rim edge 278. Lower rim edge 278 in turn is connected to end side wall section 280 of side wall 264 that extends from lower rim edge 278 to end side wall edge 282. Upper rim section 272 is provided with an annular groove that extends between radially inner edge 268 and radially outer edge 274 and that, when viewed from top wall 260 in first direction Z towards end side wall edge 282, is positioned lower than both radial edges 268, 274 such that it forms a projection on an inside of siplid 258 in the form of sealing rim 284.

Lower rim section 276 is provided with clamping edge or undercut 286 that extends, when viewed from central axis CA in second direction X radially inwardly with respect to radially outer edge 274 and lower rim edge 278, to form clamping element or undercut 286. In this example clamping element of clamping edge 286 is annular ring 286.

Siplid 258 further includes drinking opening 288 that is positioned in top wall 260 (see figure 1). In this example, the circumference of the drinking opening 288 comprises drinking opening edge 290 and hinge 292. Hinge 292 is connected to closure tab 294 and allows closure tab 294 to be opened and closed (multiple times). Hinge 292 is formed by providing a part of top wall 260 at the location of hinge 292 with a thickness that is smaller than a thickness of other parts of top wall 260. As a result, closure tab 294, when moved from the closed to the open position, automatically will fold around hinge 292.

Furthermore, drinking opening edge 290 also has a thickness that is less than a thickness of the other parts of top wall 260. This may for example be provided by means of compressing the drinking opening edge with a higher pressure than is applied to other parts of top wall 260. Preferably, drinking opening edge 290 is glazed such that it has reduced fluid uptake (and thus increased fluid resistance).

In this example (see figures 1 - 4) siplid 258 is also provided with closure tab receiving indentation 296, which is configured to receive closure tab 294 when it is in an open position. Preferably, closure tab 294 fits snugly in closure tab receiving indentation 296, such that it remains fixed therein until it is removed, i.e. pulled out, by a user of siplid 258. In order to provide improved fixation of closure tab 294 in receiving indentation 296, receiving indentation 296 may be provided with a number of ribs 295 (see most notably figure 1a, figure 1c). In this illustrated example five ribs 295 are used, which provide an increased fixation force on closure tab 296. It is noted that a single rib 295 would in principle already be sufficient to achieve desired additional fixation force. Further ribs 295 increase the desired effect. In some cases, when sufficient force is applied during inserting closure tab 294 in receiving indentation 296, closure tab 294 may be slightly distorted upon contact with ribs 295. This serves to further increase the fixation force on closure tab 294.

Also, siplid 258 in this example is provided with a number of indentations and projections 298 that represent commercial signs or embossings. The number of such indentations and projections 298, as well as the depth, form and position thereof may be varied in different siplids 258.

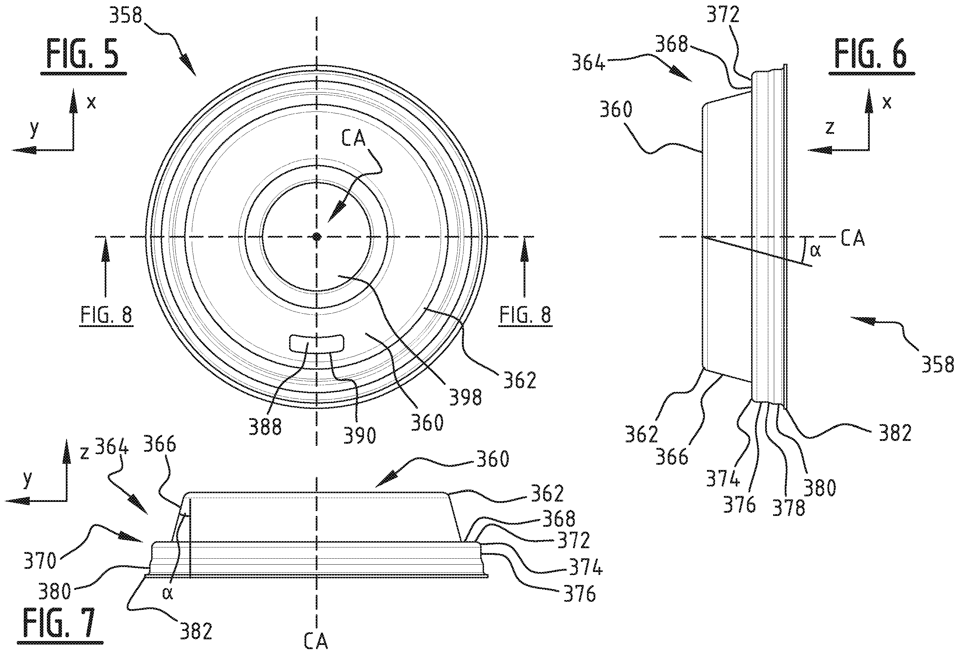

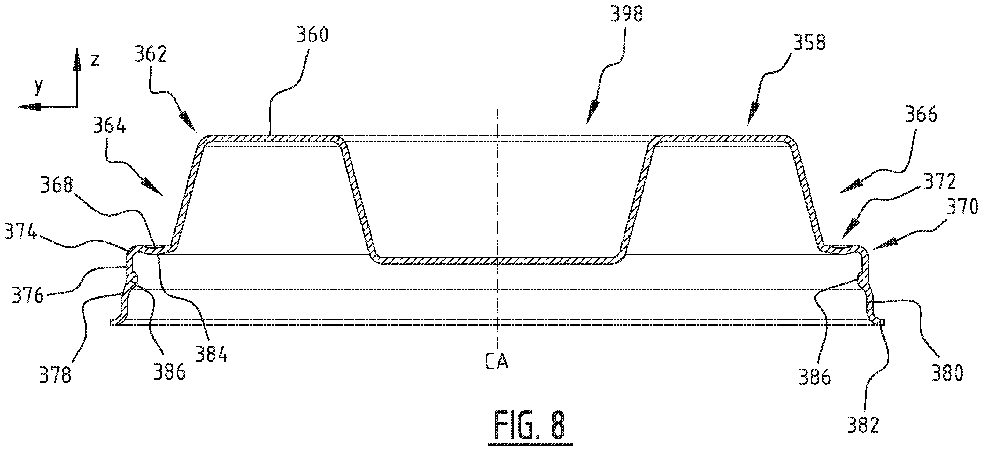

In a second example of siplid 358 according to the invention (see figures 5 - 8), siplid 358 comprises top wall 360 that extends radially outwards from central axis CA in a second direction X and in third direction Y towards top wall edge 362 that delineates top wall 360. Top wall edge 362 is connected to side wall 364, and more specifically to first side wall section 366 that extends, when viewed in first direction Z along and under an angle α with central axis CA, from top wall edge 362 to radially inner edge 368 of annular ring 370. Annular ring 370 includes upper rim section 372 that extends, when viewed from central axis CA, radially outward in second direction X and/or third direction Y from radially inner edge 368 towards radially outer edge 374. In addition, annular ring 370 includes lower rim section 376 that substantially in first direction Z from radially outer edge 374 towards lower rim edge 378. Lower rim edge 378 in turn is connected to end side wall section 380 of side wall 364 that extends from lower rim edge 378 to end side wall edge 382. Upper rim section 372 is provided with an annular groove that extends between radially inner edge 368 and radially outer edge 374 and that, when viewed from top wall 360 in first direction Z towards end side wall edge 382, is positioned lower than both radial edges 368, 374 such that it forms a projection on an inside of siplid 358 in the form of sealing rim 384.

Lower rim section 376 is provided with clamping edge 386 that extends, when viewed from central axis CA in second direction X radially inwardly with respect to radially outer edge 374 and lower rim edge 378, to form clamping element 386. In this example clamping element or clamping edge 386 is annular ring 386.

Siplid 358 further includes drinking opening 388 that is positioned in top wall 360. In this example, the circumference of the drinking opening 388 comprises drinking opening edge 390. Drinking opening 388 has drinking opening edge 390 that has a thickness that is less than a thickness of the other parts of top wall 360. This may for example be provided by means of compressing the drinking opening edge with a higher pressure than is applied to other parts of top wall 360. Preferably, drinking opening edge 390 is glazed such that it has reduced fluid uptake (and thus increased fluid resistance).

Also, siplid 358 in this example is provided with indentation 398. The number of such indentations and projections 398, as well as the depth, form and position thereof may be varied in different siplids 358.

The present invention is by no means limited to the above described preferred embodiments thereof. The rights sought are defined by the following claims, within the scope of which many modifications can be envisaged.

### Legenda

| | | | |
|---|---|---|---|
| CA | central axis | 378 | lower rim edge |
| 258 | biodegradable siplid | 380 | end side wall section |
| 260 | top wall | 382 | end side wall edge |
| 262 | top wall edge | 384 | sealing rim |
| 264 | side wall | 386 | clamping elements |
| 266 | first side wall section | 388 | drinking opening |
| 268 | radially inner edge | 390 | drinking opening edge |
| 270 | annular rim, annular ring | 398 | indentation, projection |
| 272 | upper rim section | | |
| 274 | radially outer edge | | |
| 276 | lower rim section | | |
| 278 | lower rim edge | | |
| 280 | end side wall section | | |
| 282 | end side wall edge | | |
| 284 | sealing rim | | |
| 286 | clamping elements | | |
| 288 | drinking opening | | |
| 290 | drinking opening edge | | |
| 292 | closure tab hinge | | |
| 294 | closure tab | | |
| 295 | rib(s) | | |
| 296 | closure tab receiving indentation | | |
| 298 | indentation, projection | | |
| 358 | biodegradable siplid | | |
| 360 | top wall | | |
| 362 | top wall edge | | |
| 364 | side wall | | |
| 366 | first side wall section | | |
| 368 | radially inner edge | | |
| 370 | annular rim, annular ring | | |
| 372 | upper rim section | | |
| 374 | radially outer edge | | |
| 376 | lower rim section | | |

## Claims

1. Biodegradable siplid (258,358) from moulded pulp and/or moulded fiber comprising:
- a top wall (260,360) having a top wall edge (262,362);
- a side wall (264,364) that is connected to the top wall along substantially the entire top wall edge, such that the side wall delineates the top wall; and
- one or more clamping elements (286,386) that are positioned in the side wall and that are configured to clamp the siplid over an edge of a cup and be in clamping connection with a side wall of said cup;
wherein the siplid comprises a number of compressed areas having a decreased thickness and/or an increased density,
the siplid further comprising a drinking opening (288,388) in the top wall and/or the side wall of the siplid, wherein the drinking opening has a drinking opening edge (290,390) that extends at least partially along a circumference of the drinking opening,
**characterized in that** the drinking opening edge is a compressed area.

2. Biodegradable siplid according to claim 1, wherein a reduction in the thickness and/or the increase in density is in the range of 10% - 90%, preferably in the range of 25% - 75% and more preferably in the range of 40% - 60% and/or wherein an increase in the density is in the range of 30% - 70%, preferably in the range of 35% - 65% and more preferably in the range of 40% - 45%.

3. Biodegradable siplid according to claim 1 or 2, further comprising a sealing rim (284, 384) that is provided in the side wall and that is placeable over an edge of a cup to provide a sealing connection with said cup.

4. Biodegradable siplid according to any one of the claims 1 - 3, wherein the number of compressed areas comprise moulded pulp and/or moulded fibres that are glassified, and/or wherein the number of compressed areas comprise the sealing rim (284, 384) and/or one or more of the clamping elements (286, 386).

5. Biodegradable siplid according to any one of the preceding claims, wherein the one or more clamping elements (286, 386) comprise one or more projections that extend from the side wall (264, 364) radially inwards towards a central axis (CA) that extends substantially perpendicular to the top wall (260, 360), wherein the one or more projections are placeable over the edge of a cup and against a cup side wall, and/or
wherein the one or more clamping elements are positioned along a circumferential length of the side wall, wherein the one or more clamping elements together extend over at least one third of the circumferential length, preferably over around 50% of the circumferential length and most preferably over around 75% of the circumferential length of the side wall.

6. Biodegradable siplid according to any one of the claims 3 - 5, wherein the side wall (264, 364) comprises an annular rim (270,370) that extends radially outwards in a second direction that is substantially perpendicular to the central axis (CA) that extends in a first direction, wherein the annular rim is provided with an annular projection that extends parallel to central axis in the first direction such that the annular projection comprises the sealing rim (284, 384), and/or wherein the side wall (264, 364) comprises:
- a first side wall section that extends over a predetermined length;
- an upper rim section (272,372) that extends from a radially inner edge (268,368) that is connected to the first side wall section towards a radially outer edge (274,374);
- a lower rim section (276,376) that extends substantially from the radially outer edge towards a lower rim edge; and
- an end side wall section that extends from the lower rim section towards an end side wall edge;
wherein the lower rim section comprises the one or more clamping elements (286, 386), wherein the upper rim section is provided with the sealing rim, and wherein the clamping elements and the sealing rim cooperate to form a drinking cup edge holding space in which the edge of a drinking cup is placeable and clampable such that the edge of the drinking cup is releasably lockable in the drinking cup edge holding space.

7. Biodegradable siplid according to any one of the claims 1 - 6, wherein a subset of the number of the clamping elements (286, 386) that is positioned in the side wall (264, 364) near the drinking opening (288, 388) preferably has a decreased thickness and/or an increased density compared to the number of compressed areas, or wherein the clamping element preferably comprises a single clamping ring that extends over substantially the entire circumference of the side wall, wherein the clamping ring is a compressed area of the number of compressed areas, and wherein a part of the clamping ring near the drinking opening has an increased thickness and/or increased density compared to the remaining part of the clamping ring.

8. Biodegradable siplid according to any of the claims 1-7, wherein the drinking opening (288, 388) is provided in the top wall (260, 360) of the siplid, and wherein the top wall is provided with a closure tab (294) that is configured for resealably closing the drinking opening.

9. Biodegradable siplid according to claim 8, wherein the closure tab (294) is hingedly connected to the top wall (260, 360), and wherein the hinge (292,392) comprises a hinge area that is formed by pressing a part of the drinking opening circumference to a smaller thickness than an area directly adjacent to the hinge area, and wherein the closure tab (294) is at least partially formed from the top wall (260, 360).

10. Biodegradable siplid according to any one of the preceding claims, wherein the top wall (260, 360) comprises a number of indentations and/or projections (298,398).

11. Biodegradable siplid according to claim 10, when dependent on claim 9, wherein an indentation of the number of indentations (298, 398) is configured for at least partially receiving the closure tab (294), and wherein, when the closure tab is in an open position, the drinking opening (288, 388) is accessible for a user.

12. Biodegradable siplid according to claim 11, wherein the indentation that is configured for at least partially receiving the closure tab comprises a number of ribs (295,395) that preferably extend parallel to each other along a side wall of the indentation downwards from the top wall (260, 360).

13. Drinking cup, preferably a biodegradable drinking cup, provided with a biodegradable siplid (258,358) according to any one of the claims 1 - 12.

14. Method for manufacturing a biodegradable siplid (258,358) according to one of the claims 1 - 12, the method comprising:
- providing moulded pulp and/or moulded fibre;
- compressing and drying the moulded pulp and/or moulded fibre in a mould to form one or more siplids (258, 358);
wherein the method further comprises applying, in each siplid, a number of compressed areas having a decreased thickness and/or an increased density.

15. Method according to claim 14, wherein the step of applying a number of compressed areas comprises:
- applying an increased pressure to the number of compressed areas during the compressing and drying step to provide a decreased thickness and/or an increased density; or
- compressing the number of compressed areas in a separate compression step to provide a decreased thickness and/or an increased density, and/or
wherein the method comprises compressing a subset of the number of compressed areas such that the subset has a decreased thickness and/or an increased density, wherein the subset of the number of compressed areas comprises clamping elements that are positioned near and/or adjacent to the drinking opening.

## Patentansprüche

1. Biologisch abbaubarer Schlürfdeckel (258,358) aus geformtem Zellstoff und/oder geformter Faser, umfassend:
- eine obere Wand (260,360), die einen Rand (262,362) der oberen Wand aufweist;
- eine Seitenwand (264,364), die im Wesentlichen entlang des gesamten Rands der oberen Wand mit der oberen Wand derart verbunden ist, dass die Seitenwand die obere Wand abgrenzt; und
- ein oder mehrere Klemmelemente (286,386), die in der Seitenwand positioniert sind und die konfiguriert sind, um den Schlürfdeckel über einen Rand eines Bechers zu klemmen und in Klemmverbindung mit einer Seitenwand des Bechers zu stehen;
wobei der Schlürfdeckel eine Anzahl komprimierter Bereiche umfasst, die eine verringerte Dicke und/oder eine erhöhte Dichte aufweisen,
der Schlürfdeckel ferner umfassend eine Trinköffnung (288,388) in der oberen Wand und/oder der Seitenwand des Schlürfdeckels, wobei die Trinköffnung einen Trinköffnungsrand (290,390) aufweist, der sich mindestens teilweise entlang eines Umfangs der Trinköffnung erstreckt,
**dadurch gekennzeichnet, dass** der Trinköffnungsrand ein komprimierter Bereich ist.

2. Biologisch abbaubarer Schlürfdeckel nach Anspruch 1, wobei eine Reduzierung der Dicke und/oder die Erhöhung der Dichte im Bereich von 10 %-90 %, vorzugsweise im Bereich von 25 %-75 % und mehr bevorzugt im Bereich von 40 %-60 % liegt und/oder wobei eine Erhöhung der Dichte im Bereich von 30 %-70 %, vorzugsweise im Bereich von 35 %-65 % und mehr bevorzugt im Bereich von 40 %-45 % liegt.

3. Biologisch abbaubarer Schlürfdeckel nach Anspruch 1 oder 2, ferner umfassend eine Dichtungskante (284, 384), die in der Seitenwand bereitgestellt ist und die über einen Rand eines Bechers platzierbar ist, um eine Dichtungsverbindung mit dem Becher bereitzustellen.

4. Biologisch abbaubarer Schlürfdeckel nach einem der Ansprüche 1 bis 3, wobei die Anzahl komprimierter Bereiche geformten Zellstoff und/oder geformte Fasern umfasst, die glasiert sind, und/oder wobei die Anzahl komprimierter Bereiche die Dichtungskante (284, 384) und/oder ein oder mehrere der Klemmelemente (286, 386) umfasst.

5. Biologisch abbaubarer Schlürfdeckel nach einem der vorstehenden Ansprüche, wobei das eine oder die mehreren Klemmelemente (286, 386) einen oder mehrere Vorsprünge umfassen, die sich von der Seitenwand (264, 364) radial nach innen in Richtung einer Mittelachse (CA) erstrecken, die sich im Wesentlichen senkrecht zu der oberen Wand (260, 360) erstreckt,
wobei der eine oder die mehreren Vorsprünge über den Rand eines Bechers und gegen eine Becherseitenwand platzierbar sind, und/oder wobei das eine oder die mehreren Klemmelemente entlang einer Umfangslänge der Seitenwand positioniert sind, wobei sich das eine oder die mehreren Klemmelemente zusammen über mindestens ein Drittel der Umfangslänge, vorzugsweise über etwa 50 % der Umfangslänge und am meisten bevorzugt über etwa 75 % der Umfangslänge der Seitenwand erstrecken.

6. Biologisch abbaubarer Schlürfdeckel nach einem der Ansprüche 3 bis 5, wobei die Seitenwand (264, 364) eine ringförmige Kante (270,370) umfasst, die sich radial nach außen in eine zweite Richtung erstreckt, die im Wesentlichen senkrecht zu der Mittelachse (CA) ist, die sich in eine erste Richtung erstreckt, wobei die ringförmige Kante mit einem ringförmigen Vorsprung bereitgestellt ist, der sich parallel zu der Mittelachse in die erste Richtung derart erstreckt, dass der ringförmige Vorsprung die Dichtungskante (284, 384) umfasst, und/oder wobei die Seitenwand (264, 364) umfasst:
- einen ersten Seitenwandabschnitt, der sich über eine zuvor bestimmte Länge erstreckt;
- einen oberen Kantenabschnitt (272,372), der sich von einen radial inneren Rand (268,368), der mit dem ersten Seitenwandabschnitt verbunden ist, in Richtung eines radial äußeren Rands (274,374) erstreckt;
- einen unteren Kantenabschnitt (276,376), der sich im Wesentlichen von dem radial äußeren Rand in Richtung eines Rands der unteren Kante erstreckt; und
- einen Endseitenwandabschnitt, der sich von dem unteren Kantenabschnitt in Richtung eines Endseitenwandrands erstreckt;
wobei der untere Kantenabschnitt das eine oder die mehreren Klemmelemente (286, 386) umfasst,
wobei der obere Kantenabschnitt mit der Dichtungskante bereitgestellt ist, und wobei die Klemmelemente und die Dichtungskante zusammenwirken, um einen Trinkbecherrandhalteraum auszubilden, in den der Rand eines Trinkbechers derart platzierbar und klemmbar ist, dass der Rand des Trinkbechers in dem Trinkbecherrandhalteraum lösbar verriegelbar ist.

7. Biologisch abbaubarer Schlürfdeckel nach einem der Ansprüche 1 bis 6, wobei eine Teilmenge der Anzahl der Klemmelemente (286, 386), die in der Seitenwand (264, 364) in der Nähe der Trinköffnung (288, 388) positioniert ist, vorzugsweise eine verringerte Dicke und/oder eine erhöhte Dichte im Vergleich zu der Anzahl komprimierter Bereiche aufweist, oder wobei das Klemmelement vorzugsweise einen einzelnen Klemmring umfasst, der sich im Wesentlichen über den gesamten Umfang der Seitenwand erstreckt, wobei der Klemmring ein komprimierter Bereich der Anzahl komprimierter Bereiche ist, und wobei ein Teil des Klemmrings in der Nähe der Trinköffnung eine erhöhte Dicke und/oder erhöhte Dichte im Vergleich zu dem verbleibenden Teil des Klemmrings aufweist.

8. Biologisch abbaubarer Schlürfdeckel nach einem der Ansprüche 1 bis 7, wobei die Trinköffnung (288, 388) in der oberen Wand (260, 360) des Schlürfdeckels bereitgestellt ist und wobei die obere Wand mit einer Verschlusslasche (294) bereitgestellt ist, die zum wiederverschließbaren Verschließen der Trinköffnung konfiguriert ist.

9. Biologisch abbaubarer Schlürfdeckel nach Anspruch 8, wobei die Verschlusslasche (294) mit der oberen Wand (260, 360) scharnierartig verbunden ist, und wobei das Scharnier (292,392) einen Scharnierbereich umfasst, der durch Drücken eines Teils des Trinköffnungsumfangs auf eine geringere Dicke als ein Bereich ausgebildet wird, der an den Scharnierbereich direkt angrenzt, und wobei die Verschlusslasche (294) mindestens teilweise aus der oberen Wand (260, 360) ausgebildet ist.

10. Biologisch abbaubarer Schlürfdeckel nach einem der vorstehenden Ansprüche, wobei die obere Wand (260, 360) eine Anzahl von Vertiefungen und/oder Vorsprüngen (298,398) umfasst.

11. Biologisch abbaubarer Schlürfdeckel nach Anspruch 10, wenn abhängig von Anspruch 9, wobei eine Vertiefung der Anzahl von Vertiefungen (298, 398) zum mindestens teilweisen Aufnehmen der Verschlusslasche (294) konfiguriert ist, und wobei die Trinköffnung (288, 388) für einen Benutzer zugänglich ist, wenn sich die Verschlusslasche in einer offenen Position befindet.

12. Biologisch abbaubarer Schlürfdeckel nach Anspruch 11, wobei die Vertiefung, die zum mindestens teilweisen Aufnehmen der Verschlusslasche konfiguriert ist, eine Anzahl von Rippen (295,395) umfasst, die sich vorzugsweise parallel zueinander entlang einer Seitenwand der Vertiefung von der oberen Wand (260, 360) nach unten erstrecken.

13. Trinkbecher, vorzugsweise ein biologisch abbaubarer Trinkbecher, der mit einem biologisch abbaubaren Schlürfdeckel (258,358) nach einem der Ansprüche 1 bis 12 bereitgestellt ist.

14. Verfahren zum Herstellen eines biologisch abbaubaren Schlürfdeckels (258,358) nach einem der Ansprüche 1 bis 12, das Verfahren umfassend:
- Bereitstellen von geformtem Zellstoff und/oder geformten Fasern;
- Komprimieren und Trocknen des geformten Zellstoffs und/oder der geformten Faser in einer Form, um einen oder mehrere Schlürfdeckel (258, 358) auszubilden;
wobei das Verfahren ferner ein Anbringen einer Anzahl komprimierter Bereiche, die eine verringerte Dicke und/oder eine erhöhte Dichte aufweisen, in jedem Schlürfdeckel umfasst.

15. Verfahren nach Anspruch 14, wobei der Schritt des Anbringens einer Anzahl komprimierter Bereiche umfasst:
- Anbringen eines erhöhten Drucks auf die Anzahl komprimierter Bereiche während des Komprimierungs- und Trocknungsschritts, um eine verringerte Dicke und/oder eine erhöhte Dichte bereitzustellen; oder
- Komprimieren der Anzahl komprimierter Bereiche in einem separaten Komprimierungsschritt, um eine verringerte Dicke und/oder eine erhöhte Dichte zu erreichen, und/oder
wobei das Verfahren das Komprimieren einer Teilmenge der Anzahl komprimierter Bereiche derart umfasst, dass die Teilmenge eine verringerte Dicke und/oder eine erhöhte Dichte aufweist, wobei die Teilmenge der Anzahl komprimierter Bereiche Klemmelemente umfasst, die in der Nähe und/oder angrenzend an die Trinköffnung positioniert sind.

## Revendications

1. Couvercle à boire biodégradable (258,358) à partir de pâte moulée et/ou de fibres moulées comprenant :
- une paroi supérieure (260,360) ayant un bord de paroi supérieure (262,362) ;
- une paroi latérale (264,364) qui est reliée à la paroi supérieure sensiblement le long de la totalité du bord de paroi supérieure, de telle sorte que la paroi latérale délimite la paroi supérieure ; et
- un ou plusieurs éléments de serrage (286,386) qui sont positionnés dans la paroi latérale et qui sont conçus pour serrer le couvercle à boire sur un bord d'un gobelet et être en liaison de serrage avec une paroi latérale dudit gobelet ;
dans lequel le couvercle à boire comprend un nombre de zones comprimées ayant une épaisseur réduite et/ou une densité accrue,
le couvercle à boire comprenant en outre une ouverture pour boire (288,388) dans la paroi supérieure et/ou la paroi latérale du couvercle à boire, dans lequel l'ouverture pour boire a un bord d'ouverture pour boire (290,390) qui s'étend au moins partiellement le long d'une circonférence de l'ouverture pour boire, **caractérisé en ce que** le bord d'ouverture pour boire est une zone comprimée.

2. Couvercle à boire biodégradable selon la revendication 1, dans lequel la réduction de l'épaisseur et/ou l'augmentation de la densité est dans la plage de 10 % à 90 %, de préférence dans la plage de 25 % à 75 % et plus préférablement dans la plage de 40 % à 60 % et/ou dans lequel l'augmentation de la densité est dans la plage de 30 % à 70 %, de préférence dans la plage de 35 % à 65 % et plus préférablement dans la plage de 40 % à 45 %.

3. Couvercle à boire biodégradable selon la revendication 1 ou 2, comprenant en outre un rebord d'étanchéité (284, 384) qui est fourni dans la paroi latérale et qui peut être placé sur un bord d'un gobelet pour fournir une liaison d'étanchéité avec ledit gobelet.

4. Couvercle à boire biodégradable selon l'une quelconque des revendications 1 à 3, dans lequel le nombre de zones comprimées comprend de la pâte moulée et/ou des fibres moulées qui sont vitrifiées, et/ou dans lequel le nombre de zones comprimées comprend le rebord d'étanchéité (284, 384) et/ou un ou plusieurs des éléments de serrage (286, 386).

5. Couvercle à boire biodégradable selon l'une quelconque des revendications précédentes, dans lequel les un ou plusieurs éléments de serrage (286, 386) comprennent une ou plusieurs saillies qui s'étendent de la paroi latérale (264, 364) radialement vers l'intérieur en direction d'un axe central (CA) qui s'étend sensiblement perpendiculaire à la paroi supérieure (260, 360),
dans lequel les une ou plusieurs saillies peuvent être placées sur le bord d'un gobelet et contre une paroi latérale de gobelet, et/ou dans lequel les un ou plusieurs éléments de serrage sont positionnés le long d'une longueur circonférentielle de la paroi latérale, dans lequel les un ou plusieurs éléments de serrage s'étendent ensemble sur au moins un tiers de la longueur circonférentielle, de préférence sur environ 50 % de la longueur circonférentielle et de toute préférence sur environ 75 % de la longueur circonférentielle de la paroi latérale.

6. Couvercle à boire biodégradable selon l'une quelconque des revendications 3 à 5, dans lequel la paroi latérale (264, 364) comprend un rebord annulaire (270,370) qui s'étend radialement vers l'extérieur dans une seconde direction qui est sensiblement perpendiculaire à l'axe central (CA) qui s'étend dans une première direction, dans lequel le rebord annulaire est pourvu d'une saillie annulaire qui s'étend parallèlement à l'axe central dans la première direction de telle sorte que la saillie annulaire comprend le rebord d'étanchéité (284, 384), et/ou dans lequel la paroi latérale (264,364) comprend :
- une première section de paroi latérale qui s'étend sur une longueur prédéterminée ;
- une section de rebord supérieur (272,372) qui s'étend d'un bord radialement intérieur (268,368) relié à la première section de paroi latérale vers un bord radialement extérieur (274,374) ;
- une section de rebord inférieur (276,376) qui s'étend sensiblement du bord radialement extérieur vers un bord de rebord inférieur ; et
- une section de paroi latérale d'extrémité qui s'étend de la section de rebord inférieure vers un bord de paroi latérale d'extrémité ;
dans lequel la section de rebord inférieure comprend les un ou plusieurs éléments de serrage (286, 386),
dans lequel la section de rebord supérieure est pourvu d'un rebord d'étanchéité, et dans lequel les éléments de serrage et le rebord d'étanchéité coopèrent pour former un espace de maintien de bord de gobelet à boire dans lequel le bord d'un gobelet à boire peut être placé et serré de telle sorte que le bord du gobelet à boire peut être verrouillé de manière amovible dans l'espace de maintien de bord de gobelet à boire.

7. Couvercle à boire biodégradable selon l'une quelconque des revendications 1 à 6, dans lequel un sous-ensemble du nombre d'éléments de serrage (286, 386) qui est positionné dans la paroi latérale (264, 364) à proximité de l'ouverture pour boire (288, 388) a de préférence une épaisseur réduite et/ou une densité augmentée par comparaison avec le nombre de zones comprimées, ou dans lequel l'élément de serrage comprend de préférence un seul anneau de serrage qui s'étend sensiblement sur la totalité de la circonférence de la paroi latérale, dans lequel l'anneau de serrage est une zone comprimée du nombre de zones comprimées, et dans lequel une partie de l'anneau de serrage à proximité de l'ouverture pour boire a une épaisseur augmentée et/ou une densité augmentée par comparaison avec la partie restante de l'anneau de serrage.

8. Couvercle à boire biodégradable selon l'une quelconque des revendications 1 à 7, dans lequel l'ouverture pour boire (288, 388) est fourni dans la paroi supérieure (260, 360) du couvercle à boire, et dans lequel la paroi supérieure est fourni avec une languette de fermeture (294) qui est conçue pour refermer hermétiquement l'ouverture pour boire.

9. Couvercle à boire biodégradable selon la revendication 8, dans lequel la languette de fermeture (294) est reliée de manière articulée à la paroi supérieure (260, 360), et dans lequel la charnière (292,392) comprend une zone de charnière qui est formée en appuyant une partie de la circonférence d'ouverture pour boire à une épaisseur plus petite qu'une zone directement adjacente à la zone de charnière, et dans lequel la languette de fermeture (294) est au moins partiellement formée à partir de la paroi supérieure (260, 360).

10. Couvercle à boire biodégradable selon l'une quelconque des revendications précédentes, dans lequel la paroi supérieure (260, 360) comprend un nombre d'indentations et/ou de saillies (298,398).

11. Couvercle à boire biodégradable selon la revendication 10, prise en dépendance de la revendication 9, dans lequel une indentation du nombre d'indentations (298, 398) est conçue pour recevoir au moins partiellement la languette de fermeture (294), et dans lequel, lorsque la languette de fermeture est dans une position ouverte, l'ouverture pour boire (288, 388) est accessible à un utilisateur

12. Couvercle à boire biodégradable selon la revendication 11, dans lequel l'indentation conçue pour recevoir au moins partiellement la languette de fermeture comprend un nombre de nervures (295,395) qui s'étendent de préférence parallèlement les unes aux autres le long d'une paroi latérale de l'indentation vers le bas à partir de la paroi supérieure (260, 360)

13. Gobelet à boire, de préférence un gobelet à boire biodégradable, fourni avec un couvercle à boire biodégradable (258,358) selon l'une quelconque des revendications 1 à 12.

14. Procédé de fabrication d'un couvercle à boire biodégradable (258,358) selon l'une des revendications 1 à 12, le procédé comprenant :
- la fourniture de la pâte moulée et/ou des fibres moulées ;
- la compression et le séchage de la pâte moulée et/ou la fibre moulée dans un moule pour former un ou plusieurs couvercles à boire (258, 358) ;
dans lequel la procédé comprend en outre l'application, dans chaque couvercle à boire, d'un nombre de zones comprimées ayant une épaisseur réduite et/ou une densité augmentée.

15. Procédé selon la revendication 14, dans lequel l'étape d'application d'un nombre de zones comprimées comprend :
- l'application d'une pression augmentée sur le nombre de zones comprimées au cours de l'étape de compression et de séchage afin de fournir une épaisseur réduite et/ou une densité augmentée ; ou
- la compression du nombre de zones comprimées dans une étape de compression séparée afin de fournir une épaisseur réduite et/ou une densité augmentée, et/ou
dans lequel le procédé comprend la compression d'un sous-ensemble du nombre de zones comprimées de telle sorte que le sous-ensemble a une épaisseur réduite et/ou une densité augmenté, dans lequel le sous-ensemble du nombre de zones comprimées comprend des éléments de serrage positionnés à proximité et/ou à côté de l'ouverture pour boire.
